(19) Europäisches Patentamt / European Patent Office / Office européen des brevets

(11) **EP 4 286 546 A1**

(12) **EUROPEAN PATENT APPLICATION**

(43) Date of publication:
06.12.2023 Bulletin 2023/49

(21) Application number: 23158155.4

(22) Date of filing: 23.02.2023

(51) International Patent Classification (IPC):
*C22B 1/16* (2006.01)   *C22B 1/20* (2006.01)
*C22B 1/24* (2006.01)   *G01N 23/04* (2018.01)

(52) Cooperative Patent Classification (CPC):
**C22B 1/16; C22B 1/205; C22B 1/2413;**
**G01N 23/04;** G06F 30/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Tata Steel IJmuiden B.V.**
**1951 JZ Velsen-Noord (NL)**

(72) Inventor: **The designation of the inventor has not yet been filed**

(74) Representative: **Group Intellectual Property Services**
**c/o Tata Steel Nederland Technology B.V.**
**P.O. Box 10000 - 3G.37**
**1970 CA IJmuiden (NL)**

(54) **METHOD FOR THE MANUFACTURING OF SINTER GRANULES**

(57)    The invention relates to a method for the manufacturing of sinter material from sinter granules that contain a seed grain and a layer of fine particles against at least part of the seed grain, from sinter feed materials comprising one or more iron ores, sinter return fines and one or more additives, wherein the particle size distribution of each of the iron ores and at least one of the other sinter feed materials have a close fit to a desired particle size distribution for the particles for the sinter granules.

**Fig. 1**

EP 4 286 546 A1

## Description

### Field of the invention

The invention relates to a method for the manufacturing of sinter agglomerates, more in particular of iron fines containing sinter agglomerates for use in iron making processes, as well as to sinter agglomerates manufactured according the method.

### Background of the invention

Many iron ores are too small to be used directly in a blast furnace operation. These iron ores first have to be agglomerated to a product which is large and strong enough to be used in a blast furnace. To this end these iron ores are mixed with other materials and formed into granules. The iron ores together with other sinter feed materials are fed to a rotating granulation drum wherein by adding water to the mixture granules are formed.
In the sinter process, these granules are deposited on a travelling grate of a sinter machine and levelled into a bed with a certain thickness. The bed of granules is ignited from the top, air is sucked through the bed and a flame front starts to pass through the bed. In the process the granules are partially melted and after re-solidification a porous sinter cake is obtained. At the end of the sintering grate, the sinter cake is crushed and sieved. The sinter fraction which is large enough and has sufficient strength is used in a blast furnace operation.

During sintering air is sucked through the bed of sinter granules. Because the applied pressure under the grate is a constant pressure, the amount of air sucked through the bed of sinter granules is directly dependent on the permeability of the bed of sinter granules. Since the amount of air sucked through the bed during the sintering process is the rate limiting factor, the bed permeability is direct linked to the rate of sintering and therewith to the sinter productivity. The more perfect the granules are formed, the better the permeability which results in an increased production of sinter.

It is known that granules are composed of a larger seed grain, coated with a layer of fine particles. The best granules are formed if sufficient seed grains are available to bind the fine particles. The seed grain and the fine particles are bound together with water. By adding just enough water, the fine particles stick together forming a layer against or around the coarse particles. If the amount of water added is too small, the granules become too dry and almost no bonding occurs between the particles. If the amount of water added is too high, the layer of fine particles becomes muddy and soft. Optimal sinter feed material is obtained with respect to bed permeability, when the granules are composed such that these have an optimal strength with a minimal amount of water. However, during the sinter process the water content of the granules will change. After the top layer is ignited, water is evaporated in the flame front in the sinter bed and drawn together with air through the rest of the sinter bed. Because of condensation, the water amount in the lower half of the sinter bed increases as a result of which muddy and soft granules could form, which in turn results in a decrease in sinter bed permeability.

When the permeability in the lower half of the sinter bed decreases, the overall air flow through the bed will decrease, resulting in a decrease of productivity.

### Objectives of the invention

It is an objective of the present invention to provide a method to manufacture sinter granules which are formed to provide optimum permeability in a sinter bed.

It is another objective of the present invention to provide a method to manufacture sinter granules which are strong enough to withstand the load in a sinter bed.

It is another objective of the present invention to provide a method to manufacture sinter granules wherein the fine particles have an optimum close stacking.

It is another objective of the present invention to provide a method to manufacture sinter granules wherein the amount of iron ore fines is optimised.

It is another objective of the present invention to provide a method to manufacture sinter granules wherein an optimum amount of fine particles is used.

It is another objective of the present invention to provide a method to manufacture sinter material wherein the sinter material is manufactured against low costs.

It is still another objective of the present invention to provide sinter granules which in a sinter bed provide high permeability and therewith high productivity.

It is another objective of the present invention to provide sinter granules which are less sensitive for the increase amount of condensing water during sintering and therefore maintaining a high bed permeability.

### Description of the invention

According to a first aspect of the invention one or more of the objectives of the invention and further advantages are realized by providing a method for the manufacturing of sinter granules, wherein the sinter granules contain a seed grain and a layer of fine particles against at least part of the seed grain, from sinter feed materials comprising one or more iron ores, sinter return fines and one or more additives, the method comprising the steps of:

- determining the particle size distribution of each of the iron ores, of the sinter return fines and of at least one of the additives;
- defining a desired particle size distribution for the fine particles for the sinter granules of which the particle size distribution is determined;
- determining the amounts of each of the iron ores, the sinter return fines and each of the additives of which the particle size distribution is determined which when mixed achieve the best fit between the particle size distribution of the mixture and the desired particle size distribution;

- mixing the determined amounts of the iron ores, sinter return fines and the additives with water;
- forming granules from the amounts of the iron ores, sinter return fines and additives; and
- sintering the granules to sinter material.

The highest strength of a stack of particles is obtained when the internal porosity is minimised resulting in a maximum amount of contact area between the particles. With sinter granules, the stacking of the fine particles against and/or around the seed grain should be such that the porosity in the layer of fine particles is minimised. In order to realize this, the particle size distribution of the fine particles should be optimised for which a desired particle size distribution is defined.

Although preferably the particle size distribution of all sinter feed materials should be known, the method will also provide good results if the particle size distribution of the iron ore fines are known and that of the major additives.

It is further provided that after the sintering step, the resulting sinter material of a predetermined minimum size and larger is separated from the sinter material, wherein at least part of portion of smaller sinter material is used as a sinter feed material. Not all of the sinter material obtained after crushing and sieving the sinter cake resulting from the sintering step is suitable to be used as sinter material in the blast furnace because some of the sinter material is too small. For that reason all sinter material too small for use in a blast furnace is returned in the sinter process as sinter feed material. For the smaller sinter material that is returned into the sinter process as a sinter feed material the term "sinter return fines" is mainly used in the description.

In the method according the invention the particle size distribution of the iron ores, sinter return fines and additives is taking into account up to a predetermined maximum size when determining the particle size distribution of the mixture of iron ore fines and other sinter feed materials. More in particular only the fine particles, the particles that form a layer against or around the seed grains, are taken into account for the particle size distribution. It was found that good results can be obtained when fine particles with a maximum size in a range from 0.5 to 1 mm are taking into account in determining the particle size distribution. In practice it works satisfactory to take particles smaller than 0.5 mm into account in determining the particle size distribution.

According to a further aspect of the invention it is provided that the desired particle size distribution for the fine particles of the sinter feed materials used for the sinter granules fulfil the formula:

$$P_i = 100 \left( d_i \big/ D_{max} \right)^{\psi}$$

wherein

$P_i$      total percent of particles smaller than $d_i$
$d_i$      particle size
$D_{max}$      maximal particle size in layer of fine particles
$\Psi$      exponent of the formula

It was found that the above Fuller-Thompson formula for particle size distribution which among others has been used for pressing bricks and making concrete, could advantageously be used as particle size distribution formula for the fine particles around the seed grains of the granules. The Fuller-Thompson formula is based on the assumption that the particles are spherical particles.

The important difference with pressing bricks and making concrete, wherein the stacking of the particles is optimised throughout the whole body of the brick and concrete, is that with the invention the particle size distribution is only applied to the relative thin layer of particles around a seed grain. Moreover, it turned out that by using this formula for the layer of fine particles not only a sinter granule with more strength can be made, but also a well formed granule which provides maximum porosity in the whole sinter bed.

The exponent $\Psi$ is an empirical constant of the formula and is in a range of 0.3 - 0.8, more preferably in a range of 0.4 - 0.6, and most preferably 0.5. With the exponent $\Psi$ in these ranges good results have been realized.

The particle size of the seed grains is in a range of 1 - 5mm, which is large enough to be able to function as a seed grain against which the fine particles can form a layer. A large part of the sinter material that is too small to be used in the blast furnace and that is returned in the sinter process as sinter return fines, fall in this range. Although most of that part will act as seed grains, another part will fall in the fine particle range of up to 1mm and will contribute to the fine particles used to form a layer around the seed grain.

According to a further aspect of the invention the ratio in weight between fine particles and seed grains is in a range from 30 - 70% to 90 - 10%. This ratio is determining for the thickness of the layer fine particles around each seed grain and with that for the strength and stability of the granules during the sintering thereof. It also determines the costs of manufacturing the sinter granules. Iron ores with a lot of very fine particles are relatively low cost ores, but using a large quantity of fine particles in the method would mean forming thick layers of these fine particles in order to process all of the fine particles. In order to get granules of large strength the layer of fine particles around a seed grain should be of a limited thickness. So there is an optimum between the amount of low cost ores that can be used, the strength of the granules, permeability of the sinter bed, sinter productivity and sinter production costs. With the given ratio between fine particles and seed grains such an optimum can be realised.

According to a further aspect of the invention it is provided that the water content of the mixture of seed grains and fine particles is in the range of 3 to 10 wt%. This is the water content during the forming of the granules but before sintering. When less water is added, the granules will be too dry and almost no bonding occurs between the fine particles and between the fine particles and the seed grain. When too much water is added, the layer of fine particles becomes muddy and soft and the permeability of the sinter bed will decrease. Optimal sinter feed material is obtained with respect to bed permeability, when composing the granules such that these have an optimal strength with a minimal amount of water.

During the sintering process the water content of the sinter feed material will change. The top layer is ignited by a burner and water is evaporated from the top part of the sinter bed and drawn together with the air through the lower part of the sinter bed. Because of condensation, the water amount in the lower half of the sinter bed increases and muddy and soft granules could be formed resulting in a decrease in bed permeability. For that reason it is important to control the water content and to keep the water content within the given range.

It is further provided that the chemical composition of the amounts of different iron ores used for the sinter granules is within a defined composition range. Preferably, the amounts of different iron ores used for the sinter granules together contain at least 50 wt% of iron oxides and/or iron hydroxides.

In the method according to the invention the additives are chosen from the group of additives comprising burnt lime, coke breeze, coal fines, charcoal, slag forming additives (e.g. dolomite, olivine)and recycle stream materials from the iron- and steelmaking process (e.g. BF-dust, BOF-sludge). The total amount of additives is in a range of 5 - 50 wt%.

The invention also comprises the sinter material manufactured according to the method as described and claimed.

**Brief description of the drawings**

The invention will be further explained with the examples shown in the drawing, in which:

Fig. 1      shows a graph with a desired particle size distribution line and the particle size distributions of several iron ores;

Fig. 2      shows the relation between water content and permeability before and after compaction;

Fig. 3      shows the relation between the strength of the granules and the water content; and

Fig. 4      shows the relation between permeability of the sinter bed and the amount of fine particles.

**Detailed description of the drawings**

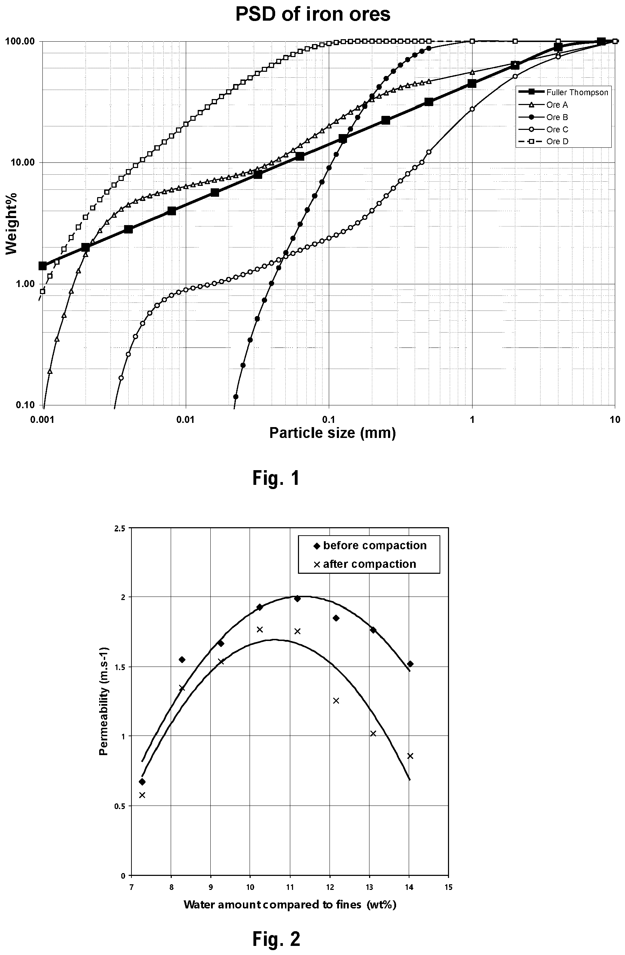

Fig. 1 shows a graph with a desired particle size distribution line and the particle size distributions of several iron ores. The straight line in the graph represents the desired particle size distribution and the curves represent the particle size distribution of a number of iron ores that were available to the applicant at the time. Not in the graph but also important is the particle size distribution of the additives, which comprise burnt lime, coke breeze, coal fines, charcoal, slag forming additives and recycle stream materials from iron- and steelmaking processes, which are used for the fine particles. In order to be able to meet the required particle size distribution the iron ores and other sinter feed material can be purchased on basis of the known particle size distribution of each of these iron ores, the sinter return fines and additives.

Apart from the layer of fine particles having a desired particle size distribution or approximately a desired particle size distribution, a sufficient amount of seeds is needed. The more seeds present in the sinter feed, the thinner the layer of fines will be. It can be assumed that a thick layer of these fine particles surrounding the seeds, has a negative effect on the stability of the granules during transport of the granules and the sinter process.

The largest particles in a sinter feed mix act a seed particles during granulation, preferably this is the size fraction of 1 to 5 mm. Most of these particles in the sinter feed mix are coming from the return sinter, the sinter return fines, the material that is too small to be used in a blast furnace. Additionally, other particles such as ore particles, limestone and coke breeze particles can act as seed grains.

However, because of economic constraints an increase in the fraction of fine iron ores in the sinter feed material is to be expected and a balance has to be found between this increase of fine iron ores and the stability of the layer of fine particles adhering to the seed grains. The fraction of seed grains in a sinter mix is more or less a given fact while the composition of the fine particles can be optimised for particle size distribution for a given chemical composition of the iron ore mixture.

The particle size distribution of various iron ores is measured by laser diffraction and compared with a desired particle size distribution by the formula given above. All iron ores have their own specific particle size distribution which is to a large extent determined by the mining and beneficiation process done by the ore supplier. Some ores only have very small particles while others have small and large particles.

For the calculation of the desired particle size distribution line in the graph a maximal particle size of 1 mm is assumed in the adhering layer of fine particles and the empirical exponent of the formula is set to 0.5, the so-called Andreasen angle.

By changing the exponent, the angle of the desired particle size distribution line in the double logarithmic plot is varied. The end point of this desired particle size distribution line is set by the chosen maximum particle size for the fine particles.

It might be clear that by varying the angle as well as the maximal particle size, more than only one desired particle size distribution is possible. The maximal particle size in the fine particles layer can be validated by size measurements of the fine particles in cross sections of granules. The optimal value for the exponent has to be selected by experiments which are based on the forming of granules, followed by permeability and strength measurements.

From the graph in Fig. 1, it is clear that by a smart mixture of the iron ores, sinter return fines and additives, a selection can be made based on their specific particle size distributions, resulting in an overall particle size distribution that fits or is close to the desired particle size distribution. Of course, this selection of iron ores fines and other sinter fee materials has to be combined with the chemical composition for an optimal sinter feed mixture.

By making a sinter feed mixture of the iron ores and other sinter feed materials which have a particle size distribution that fits or has a close fit to the desired particle size distribution, the amount of iron ores in the sinter feed material can be maximized, while the permeability and strength during the sinter process are kept at or near an optimum.

By optimising the amount of iron ores while maintaining sufficient permeability and granule strength during the sintering process, a significant improvement in iron ore cost savings is realised.

The overall water amount in comparison to the amount of fine particles is the relevant parameter to observe, because the seed grains take up very little water. Comparing total water amount to the total mass of seed grains and fine particles will give different behaviour of the granules at constant water if the ratio fine particles /seed grains is changed.

The influence of the water amount on the mixture permeability is given in Fig. 2 for a given ratio fine particles/seeds of 50/50. This figure shows that for each kind of permeability, the water amount in the sinter mixture has a significant effect. The permeability increases at first with increasing water content up to an optimum around 10% water content with respect to the amount of fine particles. From there the permeability decreases with higher water content.

In Fig. 2 two curves are shown, a curve before compaction and a curve after compaction, wherein compaction is the compaction that will occur when the formed granules are stacked in a sinter bed. The compaction is simulated by vibrating a stack of granules on a vibrating table. The curve before compaction has higher permeability values on the overall range of water amount than the curve after compaction. This behaviour is ascribed to the fact that with a low water content in the mixture granules of about the same size are formed, which contain seed grains with fine particles as well as granules that are completely formed from fine particles, which occurs with iron ores similar to type Ore D in Fig. 1. By increasing the water content, more and more fine particles are being combined with the seed grains, making the granules size increasingly homogeneous. However, after a certain maximum water content, there is too much water compared to the amount of fine particles and the granules become too soft/muddy. After compaction on the vibrating table the bed voidage, as well as the air permeability have decreased.

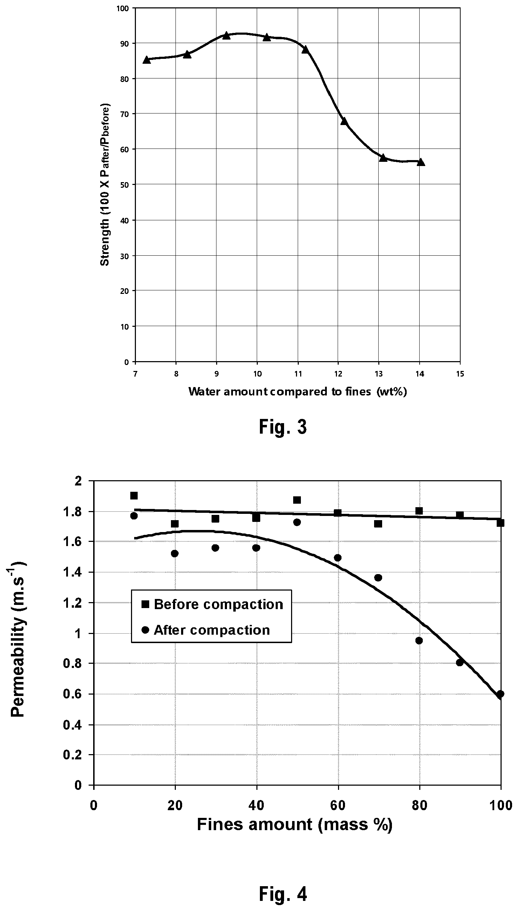

In Fig. 3 the relation between the strength of the granules and the water content is shown. With an increasing water content the plasticity of the fine particles increases as a result of which the layer of fine particles becomes muddy resulting in a considerable loss of strength.

Fig. 4 shows the relation between permeability of the sinter bed and the amount of fine particles. The water amount is set at 10.23% with respect to the mass of fine particles only, which is supposed to give an optimal permeability for the 50/50 ratio by weight mix as represented in Fig. 2. On the horizontal axis, the amount of fine particles is compared to the total amount of fine particles and seed grains, keeping the water content in the fine particles at 10.23%. Regardless of the ratio of fine particles and total amount of fine particles and seed grains, granules form and a constant value of permeability is reached. Therefore, in all cases the fine particles are agglomerated, either surrounding seeds or by themselves, which explains the trend of the upper curve in the plot. The lower curve, giving the function after compaction, is decreasing from 50 wt% onwards, because the compaction on the vibrating table make the granules that only consist of fines fall apart, which then fill part of the previous voidage in the sinter bed, therewith decreasing permeability.

**Claims**

1. Method for the manufacturing of sinter granules, wherein the sinter granules contain a seed grain and a layer of fine particles against at least part of the seed grain, from sinter feed materials comprising one or more iron ores, sinter return fines and one or more additives, the method comprising the steps of:

   - determining the particle size distribution of each of the iron ores, of the sinter return fines and of at least one of the additives;
   - defining a desired particle size distribution for the fine particles for the sinter granules of which the particle size distribution is determined;
   - determining the amounts of each of the iron ores, the sinter return fines and each of the additives of which the particle size distribution is determined which when mixed achieve the best fit between the particle size distribution of the mixture and the desired particle size distribution;
- mixing the determined amounts of the iron ores, sinter return fines and the additives with water;
- forming granules from the amounts of the iron ores, sinter return fines and additives; and
- sintering the granules to sinter material.

2. Method according to claim 1, wherein after the sintering step the sinter material of a predetermined minimum size and larger are separated from the resulting sinter material, wherein at least part of portion of smaller sinter material is used as sinter feed material.

3. Method according to claim 1 or 2, wherein the particle size distribution of the iron ores, sinter return fines and additives is taking into account up to a predetermined maximum size when determining the particle size distribution of the mixture of iron ore fines and other sinter feed materials.

4. Method according to claim 3, wherein fine particles with a maximum size in a range of 0.5 to 1 mm are taking into account in determining the particle size distribution.

5. Method according to any of the preceding claims 1 to 4, wherein the desired particle size distribution for the fine particles of the sinter feed materials used for the sinter granules fulfil the formula:

$$P_i = 100 \left( \frac{d_i}{D_{max}} \right)^{\psi}$$

wherein

$P_i$ total percent of particles smaller than $d_i$ $d_i$ particle size
$D_{max}$ maximal particle size in layer of fine particles
$\Psi$ exponent of the formula

6. Method according to claim 5, wherein the exponent $\Psi$ of the formula is in a range of 0.3 - 0.8.

7. Method according to claim 5, wherein the exponent $\Psi$ of the formula is in a range of 0.4 - 0.6.

8. Method according to any of the preceding claims 1 to 7, wherein the particle size of the seed grains is in a range of 1 to 5 mm.

9. Method according to any of the preceding claims 1 to 8, wherein the ratio in weight between fine particles and seed grains is in a range from 30-70% to 90-10%.

10. Method according to any of the preceding claims 1 to 9, wherein the water content of the mixture of seed grains and fine particles is in a range of 3 to 10 wt%.

11. Method according to any of the preceding claims 1 to 10, wherein the chemical composition of the amounts of different iron ores used for the granules is within a defined composition range.

12. Method according to claim 11, wherein the amounts of different iron ores used for the sinter granules together contain at least 50 wt% of iron oxides and/or iron hydroxides.

13. Method according to any of the preceding claims 1 to 12, wherein the additives are chosen from the group of additives comprising burnt lime, coke breeze, coal fines, charcoal, slag forming additives and recycle stream materials from iron- and steelmaking processes.

14. Method according to any of the preceding claims 1 to 13, wherein the total amount of additives is in a range of 5 to 50 wt%.

15. Sinter material manufactured according to the method according to any of the preceding claims 1 to 14.

## PSD of iron ores

**Fig. 1**

**Fig. 2**

**Fig. 3**

**Fig. 4**

Europäisches
Patentamt

European
Patent Office

Office européen
des brevets

# EUROPEAN SEARCH REPORT

Application Number

EP 23 15 8155

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 104 204 243 A (JFE STEEL CORP) 10 December 2014 (2014-12-10) * claim 1 to 4 * | 1-15 | INV. C22B1/16 C22B1/20 C22B1/24 G01N23/04 |
| A | KR 2013 0070827 A (POSCO [KR]) 28 June 2013 (2013-06-28) * paragraph [0058] * | 1-15 | |
| A | KR 2003 0028115 A (POSCO [KR]) 8 April 2003 (2003-04-08) * claim 2 * | 1-15 | |
| A | KR 100 377 274 B1 (PO HANG IRON & STEEL) 19 June 2003 (2003-06-19) * the whole document * | 1-15 | |
| A | KR 101 643 272 B1 (JFE STEEL CORP [JP]) 27 July 2016 (2016-07-27) * the whole document * | 1-15 | |
| A | YANG CONG-CONG ET AL: "Some basic properties of granules from ore blends consisting of ultrafine magnetite and hematite ores", INTERNATIONAL JOURNAL OF MINERALS, METALLURGY AND MATERIALS, BEIJING KEJI DAXUE, CN, vol. 26, no. 8, 27 July 2019 (2019-07-27), pages 953-962, XP036845893, ISSN: 1674-4799, DOI: 10.1007/S12613-019-1824-7 [retrieved on 2019-07-27] * the whole document * | 1-15 | TECHNICAL FIELDS SEARCHED (IPC) C22B G01N G06F |
| A | WO 2012/015065 A1 (JFE STEEL CORP [JP]; HIGUCHI TAKAHIDE [JP] ET AL.) 2 February 2012 (2012-02-02) * the whole document * | 1-15 | |

-/--

The present search report has been drawn up for all claims

| Place of search | Date of completion of the search | Examiner |
|---|---|---|
| The Hague | 19 July 2023 | Martinez Miró, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

| | Europäisches Patentamt European Patent Office Office européen des brevets | **EUROPEAN SEARCH REPORT** | Application Number EP 23 15 8155 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 106 022 377 A (UNIV CENTRAL SOUTH) 12 October 2016 (2016-10-12) * the whole document * ----- | 1-15 | |
| A | CN 115 505 728 A (ANGANG STEEL CO LTD) 23 December 2022 (2022-12-23) * the whole document * ----- | 1-15 | |
| A | JP 2009 185356 A (KOBE STEEL LTD) 20 August 2009 (2009-08-20) * the whole document * ----- | 1-15 | |
| A | CN 109 376 500 A (UNIV CHINA GEOSCIENCES WUHAN) 22 February 2019 (2019-02-22) * the whole document * ----- | 1-15 | |

TECHNICAL FIELDS SEARCHED (IPC)

The present search report has been drawn up for all claims

| Place of search | Date of completion of the search | Examiner |
|---|---|---|
| The Hague | 19 July 2023 | Martinez Miró, M |

EPO FORM 1503 03.82 (P04C01)

## ANNEX TO THE EUROPEAN SEARCH REPORT
## ON EUROPEAN PATENT APPLICATION NO.

EP 23 15 8155

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2023

| Patent document cited in search report | | Publication date | Patent family member(s) | | Publication date |
|---|---|---|---|---|---|
| CN 104204243 | A | 10-12-2014 | AU 2013236700 | A1 | 02-10-2014 |
| | | | BR 112014023425 | B1 | 28-05-2019 |
| | | | CN 104204243 | A | 10-12-2014 |
| | | | JP 5516832 | B2 | 11-06-2014 |
| | | | JP WO2013140810 | A1 | 03-08-2015 |
| | | | KR 20140134327 | A | 21-11-2014 |
| | | | TW 201339314 | A | 01-10-2013 |
| | | | WO 2013140810 | A1 | 26-09-2013 |
| KR 20130070827 | A | 28-06-2013 | NONE | | |
| KR 20030028115 | A | 08-04-2003 | NONE | | |
| KR 100377274 | B1 | 19-06-2003 | NONE | | |
| KR 101643272 | B1 | 27-07-2016 | BR 112014028884 | A2 | 27-06-2017 |
| | | | CN 104334756 | A | 04-02-2015 |
| | | | JP 5569658 | B2 | 13-08-2014 |
| | | | JP WO2013175601 | A1 | 12-01-2016 |
| | | | KR 20140147139 | A | 29-12-2014 |
| | | | WO 2013175601 | A1 | 28-11-2013 |
| WO 2012015065 | A1 | 02-02-2012 | CN 103052724 | A | 17-04-2013 |
| | | | JP 5051317 | B1 | 17-10-2012 |
| | | | JP 2013036049 | A | 21-02-2013 |
| | | | WO 2012015065 | A1 | 02-02-2012 |
| CN 106022377 | A | 12-10-2016 | NONE | | |
| CN 115505728 | A | 23-12-2022 | NONE | | |
| JP 2009185356 | A | 20-08-2009 | NONE | | |
| CN 109376500 | A | 22-02-2019 | NONE | | |

EPO FORM P0459

For more details about this annex : see Official Journal of the European Patent Office, No. 12/82